# EUROPÄISCHE PATENTSCHRIFT

(11) **EP 1 343 603 B1**
(45) Veröffentlichungstag und Bekanntmachung des Hinweises auf die Patenterteilung: **23.05.2007**
(21) Anmeldenummer: 01990430.9
(22) Anmeldetag: 22.11.2001
(51) Int. Cl.: B23B 31/20

(54) **SPANNFUTTER**
CHUCK
MANDRIN

(30) Priorität: 22.11.2000 DE 10057977
(43) Veröffentlichungstag der Anmeldung: 17.09.2003
(73) Patentinhaber: HAINBUCH GMBH SPANNENDE TECHNIK, D-71672 Marbach (DE)
(72) Erfinder: RALL, Gerhard, 71672 Marbach (DE)
(74) Vertreter: Kastner, Hermann
(86) Internationale Anmeldenummer: PCT/EP2001/013572
(87) Internationale Veröffentlichungsnummer: WO 2002/042025

(56) Entgegenhaltungen:
- DE-A- 19 853 525
- DE-C- 928 862
- GB-A- 482 766

## Beschreibung

Spannfutter haben einen Futterkörper, der mit der Hauptspindel einer Drehmaschine verbunden ist. Der Futterkörper weist eine Innenkonusfläche auf. Damit wirkt eine Spannzange oder ein Spannzangenkopf zusammen, die bzw. der eine Außenkonusfläche aufweist, die auf die Innenkonusfläche des Futterkörpers abgestimmt ist. Die folgenden Ausführungen werden auf den Spannzangenkopf, kurz Spannkopf genannt, abgestellt, obwohl sie auch für Spannzangen zumindest in entsprechender Weise gelten.

Der Spannkopf ist hohl und weist auf seiner Innenseite Spannflächen auf, die auf die Form und Abmessungen der Werkstücke abgestimmt sind. Der Spannkopf ist durch axial und radial durchgehende Trennschlitze in eine Anzahl Spannbacken unterteilt, die durch elastische Verbindungselemente miteinander zum Spannkopf vereinigt sind.

Es ist eine Verdrehsicherung vorhanden, die zwischen dem Futterkörper und dem Spannkopf wirkt, deren, dem Spannkopf zugeordneter Teil in der Symmetrieebene eines der Spannbacken angeordnet ist.

Die Innenkonusfläche des Futterkörpers und die Außenkonusfläche der Spannbacken liegen nur dann satt aneinander an, wenn das im Spannkopf eingespannte Werkstück Nenndurchmesser hat. Bei Abweichungen vom Nennmaß wird der Spannkopf beim Spannvorgang mehr oder weniger weit in den Futterkörper hineingezogen. Dann liegen die Spannbacken entweder nur entlang ihrer äußeren Längskanten oder nur entlang ihrem Scheitelbereich an der Innenkonusfläche des Futterkörpers an. Das führt zu hohen Flächenpressungen und entsprechend großem Abrieb vor allem beim Spannvorgang.

Hinzu kommt, dass beim Herstellen der Trennschlitze die Längskanten der Spannbacken beschädigt werden können oder dass beim Handhaben des Spannkopfes die Längskanten verformt werden können, so dass im Bereich ihrer Längskanten die Spannbacken nicht mehr einwandfrei an der Innenkonusfläche des Futterkörpers anliegen.

Um diese Nachteile zu verringern ist es bekannt, im Bereich der Längskanten und im Bereich der Scheitellinie der Spannbacken etwas Werkstoff abzutragen, so dass diese Flächenbereiche im Nennzustand entsprechend hohl liegen. Das wiederum hat den Nachteil zur Folge, dass an diesen Hohlstellen Schmutz eindringen kann, der den Sitz der Spannbacken im Futterkörper verschlechtern kann.

Der Erfindung liegt die Aufgabe zugrunde, Spannfutter so zu gestalten, dass die gegenseitige Anlage der Spannbacken und des Futterkörpers verbessert ist und dadurch der Verschleiß der Teile verringert ist.

Diese Aufgabe wird durch Spannfutter mit den Merkmalen des Anspruches 1 gelöst.

Dadurch, dass im Umfangsbereich eines jeden Trennschlitzes des Spannkopfes an der Innenkonusfläche des Futterkörpers eine Ausnehmung vorhanden ist, deren Umfangserstreckung größer als diejenige des Trennschlitzes ist und deren axiale Erstreckung mindestens gleich der größten axialen Überdeckungsstrecke der beiden Konusflächen ist, kommen die Längskanten der Spannbacken mit der Innenkonusfläche des Futterkörpers nicht mehr in Berührung, und zwar auch dann nicht, wenn die Längskanten nicht oder nur unvollständig überarbeitet worden sind oder wenn sie bei der Handhabung des Spannkopfes beschädigt worden und über die theoretische Außenkonusfläche hinaus verformt worden sind. Dadurch werden Beschädigungen und auch ein erhöhter Verschleiß der Innenkonusfläche des Spannfutters vermieden und die Spanngenauigkeit des Spannfutters über längere Zeit aufrecht erhalten.

Die Anordnung der Ausnehmungen an der Innenkonusfläche des Futterkörpers hat zusätzlich den großen Vorteil, dass der Bearbeitungsaufwand für die Verbesserung der gegenseitigen Anlage sich insgesamt sehr stark verringert, weil die Ausnehmungen nur noch am Futterkörper angebracht werden und sie nicht mehr an den Spannköpfen angebracht werden müssen, die wegen der vielfältigen Werkstücke in erheblich größerer Anzahl benötigt werden.

Durch eine Ausgestaltung des Spannfutters nach Anspruch 2 wird die gegenseitige Anlage zwischen Spannfutter und Spannkopf auch im Bereich der Scheitellinie der Spannbacken verbessert, weil die Anlage auf zwei Flächenbereiche beiderseits der Scheitellinie verteilt wird.

Durch eine Ausgestaltung des Spannfutters nach Anspruch 3 erhält der Futterkörper wieder eine durchgehend glatte Innenfläche, so dass keine Lücken zwischen dem Futterkörper und dem Spannkopf vorhanden sind, durch die Schmutz zwischen die beiden Teile gelangen könnte.

Aufgrund der Nachgiebigkeit der Füllkörper können vor allem im Bereich der Längskanten der Spannbacken möglicherweise vorhandene und nach außen ragende Unregelmäßigkeiten aufgenommen werden, ohne dass die gute gegenseitige Anlage der übrigen Flächenbereiche der Spannbacken und des Futterkörpers gestört wird. Das gilt insbesondere dann, wenn der Werkstoff der Füllkörper zugleich auch kompressibel ist.

Bei einer Ausgestaltung des Spannfutters nach Anspruch 4 werden am Übergang zwischen einer Ausnehmung und den benachbarten Flächenbereichen der Innenkonusfläche scharfe Kanten vermieden, die sich in die Oberfläche der Spannbacken eindrücken könnten und dadurch die gute gegenseitige Anlage der beiden Teile beeinträchtigen könnten.

Im folgenden wird die Erfindung anhand eines in der Zeichnung dargestellten Ausführungsbeispieles näher erläutert. Es zeigen:
- Fig. 1: eine vereinfacht dargestellte Stirnansicht eines Spannfutters;
- Fig. 2: einen Längsschnitt des Spannfutters nach der Schnittverlaufslinie 2 - 2 in Fig. 1;
- Fig. 3: eine vereinfacht dargestellte Stirnansicht allein des Futterkörpers gemäß Fig. 1;
- Fig. 4: einen Längsschnitt des Futterkörpers entsprechend Fig. 2;
- Fig. 5: einen vergrößert dargestellten Ausschnitt aus Fig. 1;
- Fig. 6: eine schematisch dargestellte Ausschnittvergrößerung der Stirnansicht gemäß Fig. 5.

Das Spannfutter 10 weist einen Futterkörper 11 und einen Spannkopf 12 auf. Das Spannfutter 11 ist mit der nicht dargestellten Hauptspindel einer Drehmaschine verbunden. Der Spannkopf 12 ist über eine Kupplungsvorrichtung 13 mit einem Spannrohr 14 gekoppelt, mit der zusammen er eine teilbare Spannzange 15 bildet.

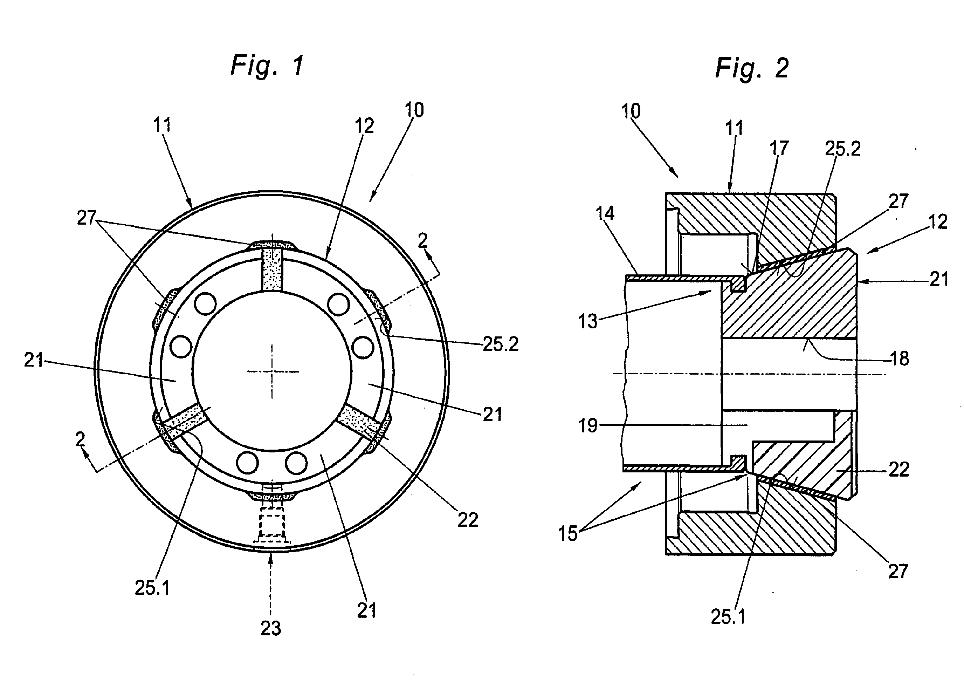

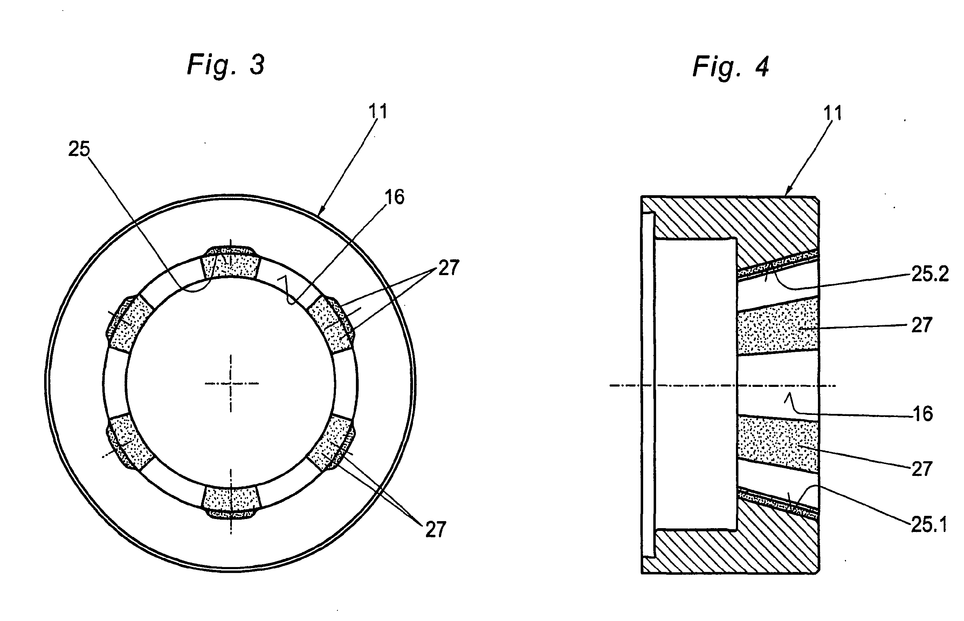

Der Futterkörper 11 weist auf seiner Innenseite eine Innenkonusfläche 16 auf (Fig. 3 und Fig. 4). Der Spannkopf 12 weist auf seiner Außenseite eine Außenkonusfläche 17 auf (Fig. 2), die auf die Innenkonusfläche 16 des Futterkörpers 11 abgestimmt ist. Der Spannkopf 12 ist hohl und weist auf seiner Innenseite eine Spannfläche 18 auf, die auf die Außenseite der zu bearbeitenden Werkstücke abgestimmt ist.

Der Spannkopf 12 ist durch axial und radial durchgehende Trennschlitze 19 in einzelne Spannbacken 21 unterteilt. Beim Spannkopf 12 sind es drei Spannbacken 21. Die Spannbacken 21 sind durch elastische Verbindungselemente 22 mit einander zum Spannkopf 12 vereinigt.

Es ist eine Verdrehsicherung 23 vorhanden, die zwischen dem Futterkörper 11 und dem Spannkopf 12 wirkt. Ihr dem Spannkopf 12 zugeordneter Teil ist in der Symmetrieebene eines der Spannbacken 21 angeordnet.

Wie aus Fig. 1 und Fig. 3 ersichtlich ist, sind an der Innenkonusfläche 16 des Futterkörpers 11 mehrere Ausnehmungen 25 vorhanden. Sie können zwei Gruppen zugeordnet werden.

Die Ausnehmungen 25.1 der einen Gruppe sind jeweils im Umfangbereich eines jeden Trennschlitzes 22 des Spannkopfes 12 angeordnet. Sie sind untereinander gleich. Ihre Umfangserstreckung ist größer als diejenige der Trennschlitze 22. Ihre axiale Erstreckung ist generell mindestens gleich der größten axialen Überdeckungsstrecke der beiden Konusflächen 16 und 17. Bei dem dargestellten Ausführungsbeispiel bedeutet das, dass die axiale Erstreckung der Ausnehmungen 25.1 gleich der axialen Erstreckung der Innenkonusfläche 16 ist. Die Ausnehmungen 25.1 sind symmetrisch zu dem zugeordneten Trennschlitz 19 des Spannkopfes 21 angeordnet.

Die Ausnehmungen 25.2 der anderen Gruppe sind jeweils im Umfangsbereich der Scheitellinie der Spannbacken 21 angeordnet. Sie sind untereinander gleich ausgebildet. Sie haben eine bestimmte Umfangserstreckung, die unter anderem von der Krümmung der Innenkonusfläche abhängt. Auch bei den Ausnehmungen 25.2 ist die Axialerstreckung mindestens gleich der größten axialen Überdeckungsstrecke der beiden Konusflächen 16 und 17. Die Ausnehmungen 25.2 sind symmetrisch zur Scheitellinie der Spannbacken 21 angeordnet.

Bei den Ausnehmungen 25 richtet sich die Art und die Abmessungen ihrer Begrenzungsfläche unter anderem nach der Krümmung der Innenkonusfläche 16 und danach, ob sie als Ausnehmungen 25.1 im Bereich eines der Trennschlitze 19 oder als Ausnehmungen 25.2 im Bereich der Scheitellinie eines der Spannbacken 21 angeordnet sind. Bei den Ausnehmungen 25.1 richtet die Umfangserstreckung sich auch nach der Breite der Trennschlitze 19.

Je nach den geschilderten Gegebenheiten kann die Begrenzungsfläche eine gleichförmig gekrümmte Fläche sein und beispielsweise als ein Abschnitt der Mantelfläche eines Kreiszylinders oder eines Kegelstumpfes ausgebildet sein. Im Bereich der Trennschlitze 19 ist, vor allem bei breiteren Trennschlitzen, die Begrenzungsfläche meist als Äquidistante zur Innenkonusfläche 16 ausgebildet.

Im Übergangsbereich zwischen einem Abschnitt der Innenkonusfläche 16 und der Begrenzungsfläche der benachbarten Ausnehmung 25 ist eine Übergangsfläche vorhanden. In Richtung der Mantellinien der Innenkonusfläche betrachtet kann die Aufrißlinie der Übergangsfläche entweder durch eine Gerade oder einen Polygonzug oder auch durch durch eine stetige Kurve gebildet werden.

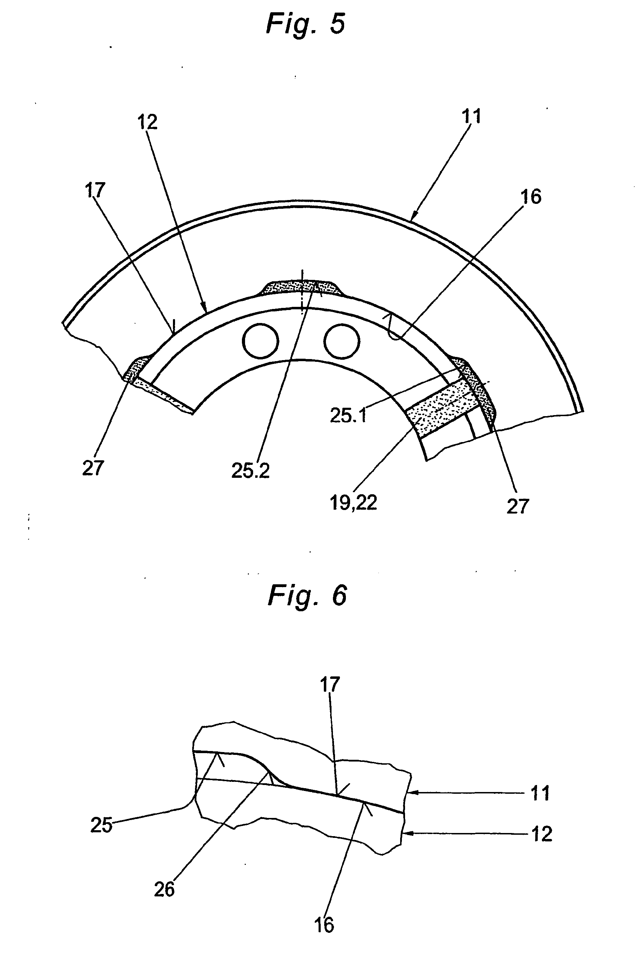

In den Stirnansichten gemäß Fig. 1, Fig. 3 und Fig. 5 sind die Ausnehmungen 25 der Einfachheit halber alle gleich dargestellt. Ihre Begrenzungsfläche ist zumindest im mittleren Umfangsbereich eine Äquidistante zur Innenkonusfläche 16, an die je eine Übergangsfläche 26 (Fig. 6) anschließt. Deren Aufrißlinie ist eine stetige Kurve, die einmal konvex und einmal konkav gekrümmt ist. Es ist von Vorteil, wenn die Übergangsfläche 26 tangential in die Innenkonusfläche 16 übergeht, damit dort keine scharfe Kante entsteht, die sich in die Außenkonusfläche 17 der Spannbacken 21 eindrücken könnte.

Die Ausnehmungen 25 sind bis zur gedachten Innenkonusfläche mit einem Füllkörper 27 ausgefüllt. Die Füllkörper 27 bestehen aus einem elastischen Werkstoff, der zugleich auch kompressibel ist, damit etwaige Unregelmäßigkeiten der Längskanten der Spannbacken 21 in ihnen aufgenommen werden können. Die Füllkörper 27 sind mit dem Futterkörper dauerhaft verbunden und zweckmäßigerweise direkt an ihm angeformt.

### Bezugszeichenliste

- 10: Spannfutter
- 11: Futterkörper
- 12: Spannkopf
- 13: Kupplungsvorrichtung
- 14: Spannrohr
- 15: Spannzange
- 16: Innenkonusfläche
- 17: Außenkonusfläche
- 18: Spannfläche
- 19: Trennschlitze
- 21: Spannbacken
- 22: Verbindungselemente
- 23: Verdrehsicherung
- 25: Ausnehmungen
- 26: Übergangsfläche
- 27: Füllkörper

## Patentansprüche

1. Spannfutter mit den Merkmalen:
- es sind ein Futterkörper (11) und ein Spannkopf (12) vorhanden,
- der Futterkörper (11) weist eine Innenkonusfläche (16) auf,
- der Spannkopf (12) weist eine Außenkonusfläche (17) auf, die auf die Innenkonusfläche (16) des Futterkörpers (11) abge stimmt ist,
- der Spannkopf (12) ist durch axial und radial durchgehende Trennschlitze (19) in eine Anzahl Spannbacken (21) unterteilt, die durch elastische Verbindungselemente (22) miteinander vereinigt sind,
- es ist eine Verdrehsicherung (23) vorhanden,
- - die zwischen dem Futterkörper (11) und dem Spannkopf (12) wirkt und
- - deren dem Spannkopf (12) zugeordneter Teil in der Symmetrieebene eines der Spannbacken (21) angeordnet ist,
**gekennzeichnet durch** die Merkmale:
- im Umfangsbereich eines jeden Trennschlitzes (19) des Spannkopfes (12) ist an der Innenkonusfläche (16) des Futterkörpers (11) je eine Ausnehmung (25.1) vorhanden,
- - die untereinander zumindest annähernd gleich sind,
- - deren Umfangserstreckung größer als diejenige des Trennschlitzes (19) ist,
- - deren Axialerstreckung mindestens gleich der größten axialen Überdeckungsstrecke der beiden Konusflächen 16; 17) ist und
- - die symmetrisch zum Trennschlitz (19) angeordnet ist.

2. Spannfutter nach Anspruch 1,
**gekennzeichnet durch** die Merkmale:
- im Umfangsbereich der Scheitellinie eines jeden Spannbackens (21) des Spannkopfes (12) ist an der Innenkonusfläche (16) des Futterkörpers (11) je eine Ausnehmung (25.2) vorhanden,
- - die untereinander zumindest annähernd gleich sind,
- - die eine bestimmte Umfangserstreckung hat,
- - deren Axialerstreckung mindestens gleich der größten axialen Überdeckungsstrecke der beiden Konusflächen (16; 17) ist und
- - die symmetrisch zur Scheitellinie des Spannbackens (21) angeordnet ist.

3. Spannfutter nach Anspruch 1 oder 2,
**gekennzeichnet durch** die Merkmale:
- die Ausnehmungen (25) sind bis zur gedachten Innenkonusfläche mit einem Füllkörper (27) ausgefüllt,
- - der aus einem elastischen und vorzugsweise zugleich kompressiblen Werkstoff hergestellt ist und
- - der mit dem Futterkörper (11) dauerhaft verbunden ist.

4. Spannfutter nach einem der Ansprüche 1 bis 3,
**gekennzeichnet durch** die Merkmale:
- die Begrenzugsfläche der Ausnehmungen (25.1) ist zumindest in ihrem mittleren Umfangsbereich eine Äquidistante der Innenkonusfläche (16),
- - die **durch** einen Abschnitt einer Zylindermantelfläche gebildet wird oder
- - die **durch** einen Abschnitt einer Kegelmantelfläche gebildet wird.

5. Spannfutter nach einem der Ansprüche 1 bis 3,
**gekennzeichnet durch** die Merkmale:
- die Begrenzugsfläche der Ausnehmungen (25.2) wird gebildet
- - **durch** einen Abschnitt einer Zylindermantelfläche, vorzugsweise einer Kreiszylindermantelfläche, oder
- - **durch** einen Abschnitt einer Kegelmantelfläche, deren Achse vorzugsweise mit der Kegelspitze der Innenkonusfläche (16) fluchtet.

6. Spannfutter nach Anspruch 1 oder 2,
**gekennzeichnet durch** die Merkmale:
- im Übergangsbereich zwischen einem Abschnitt der Innenkonusfläche (16) und der Begrenzungsfläche der benachbarten Ausnehmung (25) ist eine Übergangsfläche (26) vorhanden,
- die Aufrißlinie der Übergangsfläche (26) wird gebildet
- - entweder **durch** eine Gerade
- - oder **durch** einen Polygonzug
- - oder **durch** eine stetige Kurve,
- falls die Aufrißlinie der Übergangsfläche (26) als stetige Kurve ausgebildet ist, geht diese bevorzugt tangential in die Aufrißlinie der Innenkonusfläche (16) über.

## Claims

1. A chuck comprising the features:
- a chuck body (11) and a gripping head (12) are present,
- the chuck body (11) has an internal conical surface (16),
- the gripping head (12) has an external conical surface (17) which is adapted to the internal conical surface (16) of the chuck body (11),
- the gripping head (12) is subdivided by separating slots (19), passing axially and radially therethrough, into a number of gripping jaws (21) which are joined together with one another by means of resilient connecting elements (22),
- there is an anti-torsion device (23)
- - which acts between the chuck body (11) and the gripping head (12) and
- - of which the part associated with the gripping head (12) is arranged in the plane of symmetry of one of the gripping jaws (21),
**characterised by** the features:
- there are respective recesses (25.1) in the peripheral region of each separating slot (19) of the gripping head (12) on the internal conical surface (16) of the chuck body (11),
- - which are at least approximately identical to one another,
- - the peripheral extent of which is larger than that of the separating slot (19),
- - the axial extent of which is at least equal to the largest axial overlap distance of the two conical surfaces (16; 17), and
- - which [are] arranged symmetrically in relation to the separating slot (19).

2. A chuck according to Claim 1,
**characterised by** the features:
- there are respective recesses (25.2) in the peripheral region of the vertical line of each gripping jaw (21) of the gripping head (12) on the internal conical surface (16) of the chuck body (11),
- - which are at least approximately identical to one another,
- - which [have] a certain peripheral extent,
- - the axial extent of which is at least equal to the largest axial overlap distance of the two conical surfaces (16; 17), and
- - which [are] arranged symmetrically in relation to the vertical line of the gripping jaw (21).

3. A chuck according to Claim 1 or 2,
**characterised by** the features:
- the recesses (25) are filled with a filling material (27) up to the imaginary internal conical surface,
- - which is made from a material which is resilient and preferably compressible at the same time, and
- - which is permanently connected to the chuck body (11).

4. A chuck according to one of Claims 1 to 3,
**characterised by** the features:
- the boundary surface of the recesses (25.1), at least in its central peripheral region, is equidistant from the internal conical surface (16),
- - which is formed by a segment of an outer cylindrical surface or
- - which is formed by a segment of an outer conical surface.

5. A chuck according to one of Claims 1 to 3,
**characterised by** the features:
- the boundary surface of the recesses (25.2) is formed
- - by a segment of an outer cylindrical surface, preferably an outer circular cylinder surface, or
- - by a segment of an outer conical surface, the axis of which is preferably aligned with the cone tip of the internal conical surface (16).

6. A chuck according to Claim 1 or 2,
**characterised by** the features:
- in the transition region between a segment of the internal conical surface (16) and the boundary surface of the adjacent recess (25) there is a transition surface (26),
- the vertical projection line of the transition surface (26) is formed
- - either by a straight line
- - or by a traverse
- - or by a continuous curve,
- if the vertical projection line of the transition surface (26) is a continuous curve, this preferably extends tangentially into the vertical projection line of the internal conical surface (16).

## Revendications

1. Mandrin de serrage comprenant :
- un corps de mandrin (11) et une tête de serrage (12),
- le corps de mandrin (11) ayant une surface intérieure conique (16),
- la tête de serrage (12) ayant une surface extérieure conique (17) adaptée à la surface intérieure conique (16) du corps de mandrin (11),
- la tête de serrage (12) étant subdivisée par des fentes de séparation traversantes axialement et radialement (19) en une pluralité de mâchoires de serrage (21) réunies les unes aux autres par des éléments de liaison (22) élastiques,
- un dispositif anti-rotation (23) qui agit entre le corps de mandrin (11) et la tête de serrage (12), et
la partie associée à la tête de serrage (12) est dans le plan de symétrie d'une des mâchoires de serrage (21),
**caractérisé en ce que**
- dans la zone périphérique de chaque fente de séparation (19) de la tête de serrage (12) la surface intérieure conique (16) du corps de mandrin (11) comporte un évidement (25.1),
- ces évidements sont au moins approximativement identiques,
- leur étendue périphérique est supérieure à celle de la fente de séparation (19),
- leur étendue axiale est au moins égale au plus grand segment de recouvrement axial des deux surfaces coniques (16, 17), et
- ils sont disposés symétriquement par rapport à la fente de séparation (19).

2. Mandrin de serrage selon la revendication 1,
**caractérisé en ce que**
- dans la zone périphérique de la ligne de sommet de chaque mâchoire de serrage (21) de la tête de serrage (12) la surface intérieure conique (16) du corps de mandrin (11) comporte respectivement un évidement (25.2),
- ces évidements sont au moins approximativement identiques,
- ils ont une certaine étendue périphérique,
- leur étendue axiale est au moins égale au plus grand segment de recouvrement axial des deux surfaces coniques (16, 17), et
- ils sont disposés symétriquement par rapport à la ligne de sommet de la mâchoire de serrage (21).

3. Mandrin de serrage selon la revendication 1 ou 2,
**caractérisé en ce que**
- les évidements (25) sont remplis d'un corps de remplissage (27) jusqu'à la surface intérieure conique imaginaire,
- celui-ci est réalisé en un matériau élastique et de préférence en même temps compressible, et
- il est relié durablement avec le corps de mandrin (11).

4. Mandrin de serrage selon l'une des revendications 1 à 3,
**caractérisé en ce que**
- la surface de délimitation des évidements (25.1) est, au moins dans sa zone périphérique médiane, équidistante de la surface intérieure conique (16),
- elle est formée par un segment d'une surface d'enveloppe cylindrique, ou
par un segment d'une surface d'enveloppe conique.

5. Mandrin de serrage selon l'une des revendications 1 à 3,
**caractérisé en ce que**
la surface de délimitation des évidements (25.1) est formée
- par un segment d'une surface d'enveloppe cylindrique, de préférence d'une surface d'enveloppe cylindrique circulaire, ou
- par un segment d'une surface d'enveloppe conique dont l'axe est de préférence aligné avec le sommet du cône de la surface intérieure conique (16).

6. Mandrin de serrage selon la revendication 1 ou 2,
**caractérisé en ce que**
dans la zone de transition, entre un segment de la surface intérieure conique (16) et la surface de délimitation de l'évidement (25) adjacent, il est prévu une surface de transition (26), et la ligne de projection verticale de la surface de transition (26) est formée :
- soit par une droite,
- soit par un tracé polygonal,
- soit par une courbe continue, et
dans le cas où la ligne de projection verticale de la surface de transition (26) est formée par une courbe continue, celle-ci passe de préférence tangentiellement dans la ligne de projection de la surface intérieure conique (16) sur un plan vertical.
